# EUROPEAN PATENT APPLICATION

(11) **EP 1 840 103 A2**
(43) Date of publication of application: **03.10.2007**
(21) Application number: 07251228.8
(22) Date of filing: 22.03.2007
(51) Int. Cl.: C04B 35/195, C04B 35/622

(54) **Production process of sheet-like dense cordierite sintered body**

(30) Priority: 28.03.2006 JP 2006087534
(71) Applicant: NGK INSULATORS, LTD., Nagoya-city, Aichi 467-8530 (JP)
(72) Inventor: Fujioka, Yasumasa, c/o Legal Affairs and Intellectual Property Dept., Aichi-ken 467-8530 (JP); Suzuki, Junichi, c/o Legal Affairs and Intellectual Property Dept., Aichi-ken 467-8530 (JP); Kondou, Atsuo, c/o Legal Affairs and Intellectual Property Dept., Aichi-ken 467-8530 (JP); Masuda, Masaaki, c/o Legal Affairs and Intellectual Property Dept., Aichi-ken 467-8530 (JP)
(74) Representative: Paget, Hugh Charles Edward

(57) **Abstract**

There is provided a production process of a sheet-like dense cordierite sintered body which hardly generates cracks when dried and sintered, and has excellent formability. A production process of a sheet-like dense cordierite sintered body which has a step of forming a raw material containing cordierite powders having an average particle size of greater than 2 µm but not greater than 4 µm into a cordierite green sheet; and sintering the cordierite green sheet at from 1350 to 1450°C.

## Description

### BACKGROUND OF THE INVENTION

### Field of the Invention

The present invention relates to a production process of a sheet-like dense cordierite sintered body. More specifically, the invention pertains to a production process of a sheet-like dense cordierite sintered body which does not generate cracks easily when it is dried or sintered and has excellent formability.

### Description of the Related Art

Cordierite has conventionally been used as a porous body because it cannot be densified easily. It has been used, for example, as a material for a filter or a catalytic carrier. There has recently been proposed a method of densifying it by adding a sintering aid, grinding raw material powders, or controlling a sintering temperature (refer to, for example, Patent Documents 1 and 2). The cordierite thus densified can have improved strength, high-temperature thermal expansion coefficient and electrical properties simultaneously so that it can be used for dielectric electrodes or members for semiconductor manufacturing apparatus.
[Patent Document 1] Japanese Patent Laid-Open No. 2002-321969
[Patent Document 2] Japanese Patent Laid-Open No. 2005-314215

Densification of cordierite by adding a sintering aid thereto however causes such a problem that the cordierite becomes dense but tends to deteriorate its strength and lose some of the characteristics of cordierite. Further, addition of the additive imposes a burden on the production steps such as raw material management. When raw material powders are ground, on the other hand, cordierite excellent in any of the above-described properties is available.
When cordierite is formed into a sheet, however, the sheet must be thin so that cracks easily appear during drying or sintering. There is therefore a demand for the development of a production process of sheet-like dense cordierite sintered body excellent in formability.

Thus, a process of producing a preferable sheet-like dense cordierite sintered body while suppressing occurrence of cracks therein has not conventionally been disclosed.

The present invention has been made in view of the foregoing problem. An object of the invention is to provide a production process of a sheet-like dense cordierite sintered body which is resistant to cracking when it is dried or sintered and has excellent formability.

### SUMMARY OF THE INVENTION

For attaining the above-described object, the present invention provides the below-described production process of a sheet-like dense cordierite sintered body.

[1] A production process of a sheet-like dense cordierite sintered body, which comprises the steps of: forming a raw material containing cordierite powders having an average particle size of greater than 2 µm but not greater than 4 µm into a cordierite green sheet; and sintering the cordierite green sheet at from 1350 to 1450°C.

[2] A production process of a sheet-like dense cordierite sintered body as described above in [1], wherein the sheet-like dense cordierite sintered body has a porosity of 2% or less.

[3] A production process of a sheet-like dense cordierite sintered body as described above in [1] or [2], wherein the cordierite powders have an average particle size of greater than 2 µm but not greater than 3 µm.

[4] A production process of a sheet-like dense cordierite sintered body as described above in any one of [1] to [3], wherein the sheet-like dense cordierite sintered body has a thickness of from 100 µm to 1.0 mm.

As described above, cordierite powders having an average particle size of greater than 2 µm but not greater than 4 µm are used as a raw material in the production process of the sheet-like dense cordierite sintered body of the present invention so that the sheet produced from the above-described raw material is resistant to cracking when it is dried or sintered and it has been densified desirably. Thus, the sheet-like dense cordierite sintered body can be produced.

### DESCRIPTION OF THE PREFERRED EMBODIMENT

The embodiments of the present invention will next be described specifically. It should however be borne in mind that the present invention is not limited to or by the below-described embodiments and the design of it can be changed or modified based on the ordinary knowledge of those skilled in the art without departing from the scope of the invention.

A production process of a sheet-like dense cordierite sintered body according to the present invention comprises a step of forming a raw material containing cordierite powders having an average particle size greater of greater than 2 µm but not greater than 4 µm into a cordierite green sheet; and a step of sintering the cordierite green sheet at from 1350 to 1450°C.

In the production process of the sheet-like dense cordierite sintered body according to the present invention, the cordierite powders contained in the raw material have an average particle size of greater than 2 µm but not greater than 4 µm so that even if these powders are formed into a sheet, the sheet does not easily have cracks when it is dried or sintered and the sheet-like cordierite sintered body thus obtained is dense. The process therefore enables production of a sheet-like dense cordierite sintered body. By controlling the sintering temperature to from 1350 to 1450°C, the cordierite green sheet can be sintered sufficiently, an increase in the size of pores due to vitrification can be prevented, and lowering in its strength can be prevented.

### (1) Formation step

### (1-1) Raw material production step

In the production process of a sheet-like dense cordierite sintered body according to one embodiment of the present invention, the formation step preferably comprises a sub-step of producing a raw material and a sub-step of forming the raw material into a cordierite green sheet. In the former step, a raw material in the slurry form containing cordierite powders having an average particle size of greater than 2 µm but not greater than 4 µm is produced.

Cordierite powders are produced, for example, in the following manner. First, a raw material for producing cordierite is sintered into cordierite. The term "raw material for producing cordierite" as used herein means a raw material from which cordierite is produced. It is a ceramic raw material obtained by mixing so as to have a chemical composition composed of from 42 to 46 mass% of SiO₂, from 30 to 45 mass% of Al₂O₃ and from 12 to 16 mass% of MgO. Specific examples include a ceramic raw material containing a plurality of inorganic raw materials selected from talc, kaolin, calcined kaolin, alumina, aluminum hydroxide and silica to have a chemical composition within the above-described range.

The cordierite thus obtained is then ground into cordierite powders. Upon grinding, the average particle size of the cordierite powders is adjusted to greater than 2 µm but not greater than 4 µm, preferably greater than 2 µm but not greater than 3 µm. Adjustment of the average particle size of the cordierite powders within the above-described range makes it possible to prevent generation of cracks when the cordierite green sheet is dried and sintered and to improve the formability. The average particle size of not greater than 2 µm is not preferred, because if such powders are used, cracks easily appear in the cordierite green sheet formed with a small thickness when the sheet is dried and sintered and therefore, formability is not good. The average particle size exceeding 4 µm is not preferred, because the sheet-like cordierite sintered body obtained using powders having such an average particle size is not sufficiently dense. The average particle size is measured by using a laser diffraction particle size distribution analyzer at a refractive index of 1.55. As the laser diffraction particle size distribution analyzer, "SALD-2000" (trade name; product of Shimadzu Corporation) can, for example, be employed.

The cordierite powders have a BET specific surface area of from 4.0 to 10.0 m²/g, more preferably from 5.0 to 8.0 m²/g, especially preferably from 6.0 to 7.0 m²/g. Since the BET specific surface area of the cordierite powders falls within such a range, they do not aggregate easily, hardly generate cracks during sintering, and enable production of a dense sintered product. When the cordierite powders have a BET specific surface area less than 4.0 m²/g, a dense sintered product cannot be produced therefrom easily. When the cordierite powders have a BET specific surface area exceeding 9.0 m²/g, on the other hand, they aggregate easily, which may sometimes cause cracks easily during sintering. The BET specific surface area is determined by putting a sample in an adsorption cell, evacuating the cell under heating to remove gas molecules adsorbed to the surface of the sample, and then measuring the mass of the sample. Nitrogen is fed into the adsorption cell attached again to an apparatus. The nitrogen is then adsorbed to the surface of the sample. When the flow rate of the gas blown into the cell is increased, the gas molecules form a plurality of layers on the surface of the sample. The above-described procedure is plotted as a change in the adsorption amount relative to a change in the pressure. From the graph, the adsorption amount of the gas molecules only to the surface of the sample is determined from the isotherm equation of BET adsorption. The adsorption area of the nitrogen molecules is known in advance so that the surface area of the sample can be determined from the gas adsorption amount.

The cordierite powders have a cordierite content of preferably 93 mass% or greater, more preferably 95 mass% or greater, especially preferably 99 mass% or greater, most preferably 100 mass%. As the content of cordierite is greater, a sheet-like sintered product having better thermal shock resistance is available. The cordierite powders may contain, in addition to cordierite, another component such as mullite, spinel, sapphirine or corundum which is made of raw materials contained in cordierite, that is, Al, Mg, Si and O. A solid solution of Ti in cordierite is also preferred. The solid solution of Ti in cordierite has improved sintering property. When the amount of Ti which forms the solid solution is excessively large, the properties which the cordierite essentially has such as low thermal expansion are impaired. Such an amount is therefore not preferred. The amount of Ti which forms a solid solution is preferably 0.07 mass% or less, more preferably 0.5 mass% or less in terms of an oxide (TiO₂) relative to the entirety of the cordierite (including TiO₂).

The cordierite is ground into powders by using, for example, a ball mill, attritor, beads mill and jet mill. Of these, beads mill is especially preferred. More specifically, wet grinding for from 2.0 to 3.0 hours in an SC mill using zirconium balls having a diameter of 1 mm is preferred. The cordierite powders may be produced by grinding of natural cordierite ore.

The raw material in the slurry form is then produced by mixing the cordierite powders thus obtained with the other components used as the raw material. The other components to be added are preferably a binder, plasticizer, dispersing agent, and the like.

No particular limitation is imposed on the binder and either a water-based binder or non-water-based binder is usable. As the water-based binder, methyl cellulose, polyvinyl alcohol, polyethylene oxide and the like are preferably employed, whereby as the non-water-based binder, polyvinyl butyral, acrylic resins, polyethylene, polypropylene and the like are preferably employed. Examples of the acrylic resin include (meth)acrylic resins, (meth)acrylate copolymers, and acrylate-methacrylate copolymers.

The amount of the binder is preferably from 14.0 to 19.0 parts by mass, more preferably from 15.0 to 18.0 parts by mass, especially preferably from 16.0 to 17.0 parts by mass, based on 100 parts by mass of the cordierite powders. Addition of the binder in such an amount makes it possible to prevent generation of cracks when the raw material slurry is formed into a cordierite green sheet and the resulting green sheet is dried and sintered. The amounts of the binder less than 14.0 parts by mass based on 100 parts by mass of the cordierite powders may sometimes disturb the formation of the slurry into a sheet form or cause cracks during drying and sintering. The amounts exceeding 19.0 parts by mass, on the other hand, may disturb sufficient drying during formation and even if the sheet becomes dry, stickiness of the sheet deteriorates the handling properties in the subsequent steps.

Examples of the plasticizer usable in the invention include glycerin, polyethylene glycol, dibutyl phthalate, di-2-ethylhexyl phthalate and diisononyl phthalate.

The amount of the plasticizer is preferably from 5.0 to 9.0 parts by mass, more preferably from 6.0 to 8.0 parts by mass based on 100 parts by mass of the cordierite powders. When the amount of the plasticizer is less than 5.0 parts by mass, the cordierite green sheet becomes too soft and the sheet easily changes its shape in the subsequent processing step. When the amount exceeds 9.0 parts by mass, on the other hand, the cordierite green sheet becomes too hard and has poor handling properties. For example, even bending of it causes cracks.

As the dispersing agent, anionic surfactants, wax emulsions, pyridine and the like are usable in the water-based system, while fatty acids, phosphate esters and synthetic surfactants are usable in the non-water-based system.

The amount of the dispersing agent is preferably from 0.5 to 2.5 parts by mass, more preferably from 1.0 to 2.0 parts by mass based on 100 parts by mass of the cordierite powders. Amounts less than 0.5 part by mass may deteriorate the dispersibility of the cordierite powders and cause cracks in the cordierite green sheet. Amounts greater than 2.5 parts by mass, on the other hand, may increase impurities at the time of sintering without changing the dispersibility of the cordierite powders.

In order to mix these raw materials into slurry, stirring and mixing in a pot mill using an alumina pot or in a trommel are preferred.

The slurry thus obtained by mixing the raw materials is then preferably vacuum-defoamed to remove air bubbles from the slurry. The vacuum defoaming is carried out preferably by putting the slurry in a container made of a metal such a stainless steel, glass, synthetic resin or the like and reducing the pressure inside of the container to about from 1000 to 10000 Pa by a vacuum apparatus.

The slurry is preferably filtered through a net of from 100 to 400 mesh (opening diameter (opening size): from 30 to 100 µm) in order to remove coarse particles, mass of undissolved binder or the like from the slurry. As the net, that made of a metal such as stainless steel or synthetic resin such as nylon can be employed.

The raw material in the slurry form thus available by the raw material production step has a viscosity of preferably from 2.0 to 6.0 Pa·s, more preferably from 3.0 to 5.0 Pa·s, especially preferably from 3.5 to 4.5 Pa·s. The raw material having a viscosity adjusted to the above-described range is preferred because it can be formed into a sheet easily. The raw material having an excessively high or excessively low viscosity cannot always be formed into a sheet easily. The viscosity of the slurry is measured by a B type viscometer.

### (1-2) Step of forming into a sheet:

The raw material in the slurry form thus obtained is formed into a cordierite green sheet (formation step). No particular limitation is imposed on the formation process insofar as a cordierite green sheet can be obtained from the raw material. Any one of known processes such as doctor blade, pressing, rolling, and calender roll can be employed.

It is preferred to divide a drying zone into, for example, four sections and increase the drying temperature gradually to form the slurry into a sheet when the doctor blade process is employed. The forming speed and drying temperature must be changed as needed, depending on the kind or amount of a solvent contained in the slurry.

The thickness of the cordierite green sheet thus formed is preferably from 100 µm to 1.0 mm. A cordierite green sheet having such a thickness usually generates cracks during drying and sintering so that the production process of the sheet-like dense cordierite sintered body according to the present invention is effective as a method of drying and sintering the sheet without causing cracks.

### (2) Sintering step:

The cordierite green sheet thus obtained is dried at from 120 to 140°C and then, sintered at from 1350°C to 1450°C to produce a sheet-like dense cordierite sintered body. Degreasing at from 400 to 1000°C before sintering is preferred when the cordierite green sheet contains an organic binder.

The sintering temperature ranges from 1350 to 1450°C, preferably from 1375 to 1425°C. When the sintering temperature is too low, the cordierite sintered body cannot have sufficient strength owing to insufficient sintering of cordierite powders. Too high sintering temperature, on the other hand, is not preferred, because the cordierite sintered body has reduced strength owing to the generation of many vitreous substances and an increase in the size of pores; and moreover, properties of the cordierite are impaired. Too high sintering temperature is not preferred particularly because it leads to an increase in the thermal expansion coefficient.

No particular limitation is imposed on the retention time of the maximum temperature during sintering and it can be determined as needed depending on the shape or size of the sintered body or characteristics of the sintering furnace. For example, it is preferably from 1 to 12 hours, more preferably from 2 to 8 hours. The sintering atmosphere is not limited particularly and preferred examples of it include air atmosphere, inert atmosphere such as nitrogen and argon, hydrogen atmosphere, and reductive atmosphere such as mixed atmosphere of hydrogen and nitrogen. When the binder is employed, if the sintering is performed under air atmosphere, or the sintering is performed in an inert atmosphere or reductive atmosphere without carrying out degreasing, sintering under humidified atmosphere is preferred in view of degreasing.

The sheet-like dense cordierite sintered body available by the production process of a sheet-like dense cordierite sintered body according to the present invention has a thickness of preferably from 100 µm to 1.0 mm. When a sheet-like dense cordierite sintered body having such a thickness is produced, cracks tend to occur so that the production process of the sheet-like dense cordierite sintered body according to the present invention is effective as a method capable of producing such a thin sheet without generating cracks.

The sheet-like dense cordierite sintered body available by the production process of a sheet-like dense cordierite sintered body according to the present invention has preferably a porosity of 2% or less, more preferably 1.5% or less, especially preferably 1% or less. The lower the porosity, the more improved the strength and dielectric breakdown properties. As a result, the cordierite sintered body is suited as a dielectric electrode or member for a semiconductor manufacturing apparatus. The porosity is a value determined by the method in accordance with JIS R1634.

### [Examples]

The present invention will hereinafter be described more specifically. It should however be borne in mind that the present invention is not limited to or by these examples.

### (Example 1)

Cordierite having an average particle size of 10 µm was wet ground using zirconium balls having a diameter of 1 mm in an SC mill, one of beads mills, to yield cordierite powders having an average particle size of 2.5 µm. The resulting cordierite powders had a BET specific surface area of 6.5 m²/g. The cordierite powders were dried with a spray drier. The powders aggregated by the spray drier were separated from each other by charging the cordierite powders, dispersing agent, toluene and 2-propanol in an alumina pot and treating in a pot mill for 20 hours. Based on 100 parts by mass of the cordierite powders, 1.5 parts by mass of the dispersing agent, 44 parts by mass of toluene, and 30 parts by mass of 2-propanol were added. The average particle size was measured by the laser diffraction method using "SALD-2000" (trade name; product of Shimadzu Corporation). The BET specific surface area was measured using "Flowsorb 2300" (trade name; product of Shimadzu Corporation).

A binder solution and a plasticizer were then charged in the alumina pot and pot-milled for 20 hours. Polyvinyl butyral was used as the binder and it was added in an amount of 17 parts by mass based on 100 parts by mass of the cordierite powders. As the plasticizer, a phthalate ester was used for improving the handling properties of the cordierite green sheet and it was added in an amount of 8.5 parts by mass based on 100 parts by mass of the cordierite powders.

The slurry thus obtained was taken out in a polyethylene container and was vacuum-defoamed to regulate its viscosity and remove air bubbles contained in the slurry. The slurry viscosity after vacuum defoaming was 5.0 Pa·s. The viscosity was measured using "LVT-E" (trade name; product of BROOKFIELD) at the slurry temperature of 25°C .

After vacuum defoaming, the slurry was filtered through a nylon mesh of 400 mesh (opening diameter: 50 µm) to remove coarse particles, mass of an undissolved binder and the like from the slurry.

The raw material slurry after filtration was formed into a cordierite green sheet of 300 µm thick by the doctor blade process. The distance of the blades was adjusted as needed.

The cordierite green sheet thus obtained was sintered while retaining it in a nitrogen/hydrogen reductive atmosphere at 1375°C for 2 hours, whereby a sheet-like dense cordierite sintered body was obtained. It should be noted that hydrogenation was performed to accelerate decomposition of the binder during heating. No cracks occurred in the resulting sheet-like dense cordierite sintered body. The porosity of the sheet-like dense cordierite sintered boy was 0.5% as measured by the method in accordance with JIS R1634, suggesting that the sintered body was dense.

The process according to the present invention can be used for the production of a sheet-like dense cordierite sintered body. It can be used for the production of various cordierite sheets such as wiring substrates, in particular, sheet-like dense cordierite sintered bodies to be used under an environment exposed to drastic thermal impact, for example, electrode for purifying an exhaust gas discharged from plants, electrode for purifying an exhaust gas of movable bodies such as automobiles, and terminals for sensing an exhaust gas component.

## Claims

1. A production process of a sheet-like dense cordierite sintered body, which comprises the steps of:
forming a raw material containing cordierite powders having an average particle size of greater than 2 µm but not greater than 4 µm into a sheet form to form a cordierite green sheet; and
sintering the cordierite green sheet at from 1350 to 1450°C.

2. A production process of a sheet-like dense cordierite sintered body according to Claim 1, wherein the sheet-like dense cordierite sintered body has a porosity of 2% or less.

3. A production process of a sheet-like dense cordierite sintered body according to Claim 1 or 2, wherein the cordierite powders have an average particle size of greater than 2 µm but not greater than 3 µm.

4. A production process of a sheet-like dense cordierite sintered body according to any one of Claims 1 to 3, wherein the sheet-like dense cordierite sintered body has a thickness of from 100 µm to 1.0 mm.
